(19) Europäisches Patentamt
European Patent Office
Office européen des brevets

(11) **EP 3 374 732 B1**

(12) **EUROPÄISCHE PATENTSCHRIFT**

(45) Veröffentlichungstag und Bekanntmachung des Hinweises auf die Patenterteilung:
**22.03.2023   Patentblatt 2023/12**

(21) Anmeldenummer: **16794585.6**

(22) Anmeldetag: **08.11.2016**

(51) Internationale Patentklassifikation (IPC):
**G01B 11/06** (2006.01)      **G01B 5/012** (2006.01)

(52) Gemeinsame Patentklassifikation (CPC):
**G01B 11/0675; G01B 5/012**

(86) Internationale Anmeldenummer:
**PCT/EP2016/076997**

(87) Internationale Veröffentlichungsnummer:
**WO 2017/081017 (18.05.2017 Gazette 2017/20)**

(54) **VERFAHREN UND VORRICHTUNG ZUR BESTIMMUNG DER RÄUMLICHEN POSITION EINES GEGENSTANDES MITTELS INTERFEROMETRISCHER LÄNGENMESSUNG**

METHOD AND DEVICE FOR DETERMINING THE SPATIAL POSITION OF AN OBJECT BY MEANS OF INTERFEROMETRIC LENGTH MEASUREMENT

PROCÉDÉ ET DISPOSITIF DE DÉTERMINATION DE LA POSITION SPATIALE D'UN OBJET PAR LA MESURE INTERFÉROMÉTRIQUE D'UNE LONGUEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2015   DE 102015119274**

(43) Veröffentlichungstag der Anmeldung:
**19.09.2018   Patentblatt 2018/38**

(73) Patentinhaber: **Habrich, Björn**
**64285 Darmstadt (DE)**

(72) Erfinder: **Habrich, Björn**
**64285 Darmstadt (DE)**

(74) Vertreter: **Betten & Resch**
**Patent- und Rechtsanwälte PartGmbB**
**Maximiliansplatz 14**
**80333 München (DE)**

(56) Entgegenhaltungen:
WO-A2-2015/082683      JP-A- 2012 137 382
US-A- 4 964 218      US-A1- 2002 176 090
US-A1- 2008 111 985      US-A1- 2011 013 200
US-A1- 2013 208 128

## Beschreibung

### Gebiet der Erfindung

Die Erfindung betrifft ein Verfahren und eine Vorrichtung zur berührungslosen Erfassung der räumlichen Position eines Gegenstandes mittels interferometrischer Längenmessung.

### Hintergrund der Erfindung

Die Messung der räumlichen Position von Gegenständen hat zahlreiche Anwendungsgebiete, beispielsweise bei der Steuerung oder Regelung von verschiedenen Maschinen und Geräten in der Industrie, Medizin und insbesondere in der Robotik, wo die Genauigkeit der Positionsbestimmung der Spitze eines Roboterarms, Tasters oder dgl. maßgeblich die mögliche Fertigungsgenauigkeit bestimmt. Es besteht daher der Bedarf an Verfahren, die die Ortsposition und ggf. die Lage im Raum eines Gegenstandes wie bspw. eines Robotergreifarms mit hoher Genauigkeit zu bestimmen.

Entfernungen können berührungslos durch die Messung einer von elektromagnetischer Strahlung, beispielsweise Licht, zurückgelegten Weglänge bestimmt werden. Dazu durchläuft die elektromagnetische Strahlung einen Weg zwischen einer Referenzposition und dem Objekt einmal oder mehrfach, so dass aus der von der Strahlung zurückgelegten Weglänge die Entfernung ableitbar ist (TOF-Verfahren).

Die DE 10 2004 037 137 A1 schlägt die Kombination einer TOF-Messung mit einer weiteren optischen Messmethode wie etwa einer Triangulationsmethode oder einer interferometrischen Messmethode vor, um die Messgenauigkeit zu erhöhen.

Die DE 10 2008 045 387 A1 und die DE 10 2008 045 386 A1 beschreiben die Positionsbestimmung unter Verwendung von Lichtpulsen, wobei die Phasenlage einer Signalkomponente bestimmt wird, die mit einem Vielfachen der Repetitionsrate der Folge von Lichtpulsen oszilliert, wodurch in einem relativ großen Entfernungsbereich die Bestimmung von Abständen mit einer hohen Genauigkeit erreicht werden kann.

Die DE 10 2010 062 842 A1 beschreibt ein Verfahren zur Bestimmung der Absolutposition eines Zielobjektes unter Verwendung einer interferometrischen Messanordnung, wobei eine Intensität des Messsignals nach Durchlaufen des Messpfads als Funktion der Zeit erfasst wird, um eine Grob-Information für eine Länge des Messpfads zu bestimmen und mittels eines Referenzstrahls ein Phasensignal als Fein-Information für eine Länge des Messpfads bestimmt und mit der Grob-Information kombiniert wird.

Die US 2002/176090 A1 beschreibt ein Verfahren zur interferometrischen Messung der Oberflächenbeschaffenheit eines optischen Elements wie etwa einer Linse aufweisend ein System zur Deformierung der Wellenfront eines Referenzlichtstrahls.

Die WO 2015/082683 A2 beschreibt eine Vorrichtung und auf ein Verfahren zur taktiloptischen Messung geometrischer Merkmale bzw. Strukturen an einem Werkstück. Um eine exakte Ausrichtung der Tasterverlängerung zur Durchführung präziser Messungen problemlos vornehmen zu können, wird ein Taster umfassend eine zumindest abschnittsweise biegeelastisch ausgebildete Tasterverlängerung mit einem Befestigungsabschnitt zum Einbringen in eine Aufnahme vorgeschlagen, die einen als Verdrehsicherung ausgebildeten Befestigungsabschnitt aufweist.

Die JP 2012-137382 A beschreibt eine dreidimensionale Messvorrichtung zum Messen des gekrümmten Winkels eines stabförmigen Werkstücks, wie beispielsweise eines zylindrischen Körpers, aufweisend ein Paar halbkreisförmige Vorrichtungskomponenten, die zusammen um den Außenumfang des Werkstückes angeordnet sind.

Die US 2008/0111985 A1 beschreibt ein kamerabasiertes Zielkoordinatenmesssystem zur Verwendung beim Messen der Position von Objekten ohne Verwendung eines Laser-Entfernungsmessers zur Abstandsmessung.

Die US 4,964,218 offenbart eine verschiedene Ausführungsformen von Kugelzielen, die zum Messen, Lokalisieren und Prüfen bestimmter Positionen an verschiedenen konfigurierten Objekten verwendet werden.

Die US 2011/0013200 A1, die die Basis für die zweiteilige Form darstellt, beschreibt eine Vorrichtung zur Erfassung von Referenzobjekten, die aufweist: eine optische Einheit mit einer Sammellinse, die Licht von einem sich bewegenden Referenzobjekt sammelt, eine Empfangseinheit, die das gesammelte Licht über die Sammellinse empfängt, eine Antriebseinheit, die die optische Einheit um einen Referenzpunkt drehend bewegt und eine Steuereinheit, die die Antriebseinheit steuert, um die optische Einheit auf der Grundlage einer Position, an der das gesammelte Licht auf der Empfangseinheit empfangen wird, drehend zu bewegen.

Die US 2013/0208128 A1 beschreibt ein Lasermesssystem aufweisend einen Lasertracker mit einer um eine erste und eine zweite Achse drehbaren Struktur, eine erste Lichtquelle, die einen Lichtstrahl von der Struktur aussendet, einen Entfernungsmesser, einen ersten und einen zweiten Winkelcodierer, die einen ersten bzw. einen zweiten Drehwinkel um die erste bzw. zweite Achse messen, sowie einen Prozessor und ein Kamerasystem.

Aufgabe der Erfindung ist es, ein Verfahren und eine Vorrichtung zur Erfassung der Position eines Gegenstandes vorzuschlagen, die vielseitig anwendbar sind und eine hohe Meßgenauigkeit ermöglichen.

## Zusammenfassung der Erfindung

Erfindungsgemäß wird diese Aufgabe gelöst durch ein Verfahren zur Erfassung der Position eines beweglichen Zielobjektes gemäß Anspruch 1 und eine Vorrichtung zur Erfassung der Position eines beweglichen Zielobjektes im Raum gemäß Anspruch 14. Weitere Ausführungsbeispiele der Erfindung sind in den Unteransprüchen beschrieben.

Das erfindungsgemäße Verfahren ist vielseitig anwendbar und erlaubt die Erfassung der räumlichen Position eines Zielobjektes mit hoher Messgenauigkeit, da die interferometrische Längenmessung eine der genauesten Methoden ist, die Entfernung eines Objekts zu bestimmen. Dabei kann eine Auflösung noch deutlich unterhalb der Wellenlänge der verwendeten Strahlung wie etwa sichtbares oder infrarotes Licht, erzielt werden. Voraussetzung für eine interferometrische Messung ist jedoch eine kohärente Überlagerung des vom Zielobjekt reflektierten Strahls mit einem internen Referenzstrahl. Die Messaparatur sorgt dabei dafür, dass der Messstrahl die Kugel zentrisch trifft und so ein maximaler Interferenzkontrast und damit eine bestmögliche Meßgenauigkeit erzielt wird. Das von der Zielkugel zurückgestrahlte Signal ist dabei unabhängig von deren Lage im Raum.

Für eine kontinuierliche Messung muss die Fokusposition des Messstrahls kontinuierlich auf die Position des Zielobjekts nachgeführt werden. Die dazu erforderliche Grobbestimmung der Position des Zielobjekts kann mittels einer Positionserfassungskamera oder durch Erfassung einer durch das Zielobjekt reflektierten Intensität eines nicht fokussierten und vorzugsweise nicht kohärenten Steuerstrahls erfolgen.

## Figurenbeschreibung

Die Erfindung wird nachstehend anhand von Ausführungsbeispielen unter Bezugnahme auf die Zeichnungen im Einzelnen beschrieben. Dabei zeigt:

Fig. 1    eine schematische Darstellung des Aufbaus eines Ausführungsbeispiels der erfindungsgemäßen Vorrichtung zur Erfassung der Position eines Zielobjektes;

Fig. 2    eine schematische Darstellung der Wellenfronten des Messstrahls im Brennpunktbereich;

Fig. 3    eine schematische Darstellung der am Zielobjekt auftreffenden und reflektierten Wellenfronten des Messstrahls;

Fig. 4    eine schematische Darstellung einer Variante des erfindungsgemäßen Verfahrens zur Bestimmung der Topographie einer Oberfläche;

Fig. 5    eine schematische Darstellung einer Variante des erfindungsgemäßen Verfahrens zur Bestimmung der Position und Ausrichtung eines Gegenstandes im Raum;

Fig. 6    eine schematische Darstellung eines Ausführungsbeispiels einer erfindungsgemäßen Nachführungseinrichtung zur kontinuierlichen Nachführung des Fokus des Messstrahls; und

Fig. 7    ein schematisches Flussdiagramm zur Erläuterung eines Ausführungsbeispiels des erfindungsgemäßen Verfahrens zur Bestimmung der Position eines Zielobjektes.

## Detaillierte Beschreibung eines Ausführungsbeispiels

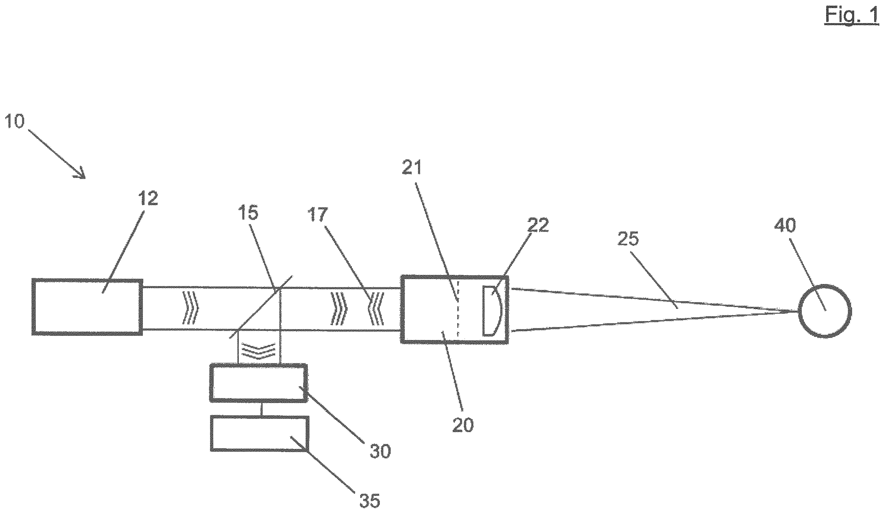

Figur 1 zeigt eine schematische Darstellung eines Ausführungsbeispiels der erfindungsgemäßen Vorrichtung 10 zur Erfassung der Position eines Zielobjektes. Zur Erzeugung eines kohärenten Messstrahls ist eine Lichtquelle 12 vorgesehen, vorzugsweise ein Laser, der kohärentes sichtbares oder infrarotes Licht erzeugt. Der Messstrahl wird einer Nachführeinheit 20 mit einem Linsensystem 22 zugeführt, die den Messstrahl 25 auf das Zielobjekt 40 fokussiert. Außerdem ist eine Einrichtung 21 zur Erzeugung eines zurückgestrahlten Referenzstrahls 17 vorgesehen. Diese kann beispielsweise als teilreflektierender Spiegel oder als Kombination aus Strahlteiler und Spiegel ausgebildet sein. Dabei kann der Referenzstrahl vor, innerhalb oder auch nach der Nachführungseinheit erzeugt werden. Das von dem Zielobjekt 40 zurückgestrahlte Signal läuft vorzugsweise auf demselben Lichtweg zurück zu einem Strahlteiler 15, wird zusammen mit dem Referenzstrahl 17 auf den Detektor 30 reflektiert und interferiert auf diesem Weg mit dem Referenzstrahl 17. Das vom Detektor empfangene Interferenzsignal wird von einer Auswertungseinheit 35 ausgewertet und so die Differenz der Lichtlaufwege des Referenzstrahls 17 und des Messstrahls 25 ermittelt. Durch eine Kalibrierung des Systems wird so eine Messung des Abstandes des Zielobjekts 40 ermöglicht.

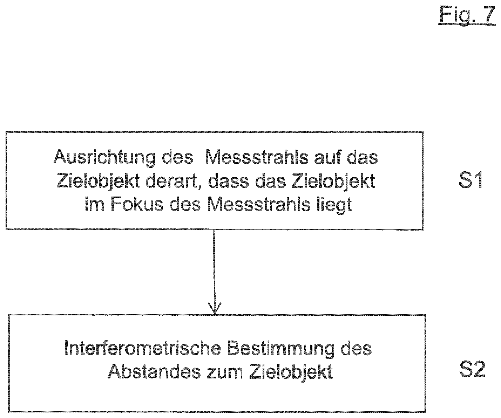

Das erfindungsgemäße Verfahren zur Erfassung der Position eines Zielobjektes ist in seiner allgemeinsten Form in Fig. 7 dargestellt. In einem ersten Verfahrensschritt S1 wird der Messstrahl 25 auf das Zielobjekt derart ausgerichtet, dass das Zielobjekt im Fokus des Messstrahls liegt und so ein kohärenter Reflexionsstrahl erzeugt wird, der mit einem Referenzstrahl ein Interferenzsignal erzeugt. Im zweiten Verfahrensschritt S2 wird der Abstand von einem Referenzpunkt zum Zielobjekt interferometrisch ermittelt.

Bei dem Zielobjekt 40 handelt es sich um einen Körper mit einer reflektierenden konvexen Oberfläche, vorzugsweise eine Kugel mit verspiegelter Oberfläche. Wenn der Messstrahl 25 das Zielobjekt 40 zentrisch trifft, wird der Messstrahl reflektiert und gelangt vorzugsweise über den gleichen Strahlweg zurück zum Strahlteiler 15, wo der zurückkommende Strahl sich mit dem Referenzstrahl 17 interferometrisch überlagert und die Strahlintensität vom Detektor 30 erfasst wird. Vorzugsweise werden die Strahlen zwischen Lichtquelle 12, Nachführungseinheit 20 und Detektor 30 in Lichtleitfasern geführt. Die Lichtquelle 12 zusammen mit der Einrichtung 21 zur Erzeugung des Referenzstrahls, dem Zielobjekt 40 und dem Detektor 30 bilden dabei das der Entfernungsmessung dienende Interferometer. Der Lichtlaufweg des Referenzstrahls zur Reflexionsfläche des Referenzstrahl-Erzeugungseinrichtung 21 stellt hierbei die Referenzlänge für die Entfernungsmessung dar. Konventionelle Interferometer erlauben dabei nur eine relative Längenmessung kleiner einer halben Lichtwellenlänge. Mit modernen Verfahren können darüber hinaus auch größere relative und sogar absolute Entfernungen gemessen werden. Steht ein Interferometer für absolute Entfernungsmessungen nicht zur Verfügung, kann das vorgeschlagene Verfahren trotzdem implementiert werden wenn Referenzpunkte für die relative Messung geschaffen werden.

Ein großer Vorteil der erfindungsgemäßen Verwendung von reflektierenden Kugeln als Zielobjekte besteht darin, dass das Zielobjekt vollkommen passiv ausgeführt werden kann. Eine Ausrichtung des Zielobjektes auf den Messstrahl ist nicht notwendig. Umgekehrt ist es jedoch erforderlich, dass die Kugel vom Messstrahl mit hoher Genauigkeit mittig getroffen wird. Dies wird vorzugsweise durch ein mehrstufiges System zur Strahlablenkung erreicht: Zunächst muss die Kugelposition grob ermittelt, und die Auskoppeleinheit auf die Kugel ausgerichtet werden. Im nächsten Schritt muss die Mitte der Kugel gefunden werden. Erst an diesem Ort können die interferometrischen Methoden zur Anwendung kommen. Da die eigentliche Längenmessung schnell möglich ist, kann auch mit dynamischen Systemen die Kugel verfolgt und in kurzen Zeitabständen die Entfernung zum Kugelzentrum gemessen werden. Die grobe Ausrichtung auf die Kugel 40 kann beispielsweise realisiert werden durch eine Positionserfassung mittels einer an sich bekannten Kamera (nicht dargestellt): Mit Hilfe von einer oder mehrerer Kameras zusammen mit geeigneter Bildauswertungssoftware kann die Position einer Kugel durch Triangulation bestimmt werden. Alternativ kann die Grobausrichtung auf die Kugel mittels Rückreflex von der Kugel erfolgen. Mit Hilfe von hellem, nicht fokussiertem Licht kann der Rückreflex der Kugel mit derselben Optik, die auch für den Messstrahl genutzt wird, gesucht werden. Dabei ist allerdings wichtig, dass keine Interferenzen entstehen wie für die Messung anschließend benötigt. Nur dann fällt die reflektierte Leistung monoton mit dem Abstand vom Kugelzentrum. Diese Methode kann mit einem zusätzlichen Laser, aber auch mit dem Laser des Interferometers selbst realisiert werden, wobei die Laserwellenlänge moduliert wird.

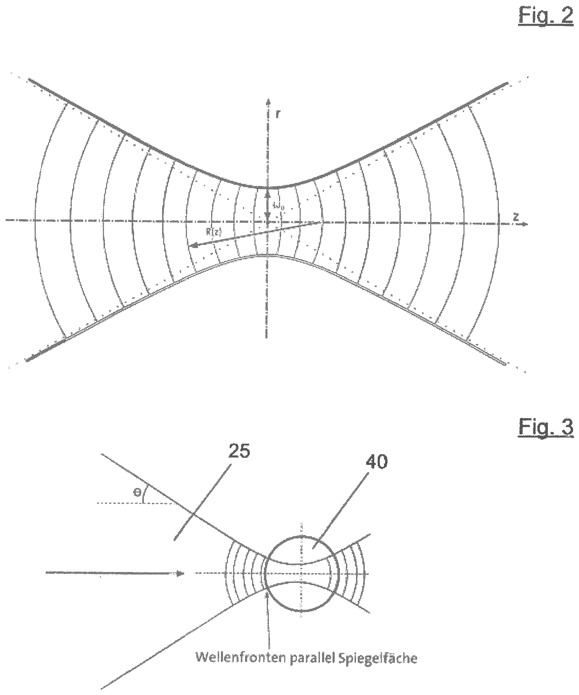

Die Reflexion des Messstrahls 25 am Zielobjekt 40 wird im Folgenden anhand der Fig. 2 und 3 im Detail erläutert.

Für die interferometrische Längenmessung an einer konvexen, insbesondere kugelförmigen Oberfläche müssen neben dem genauen Treffen des Reflexionspunktes auf der Kugel 40 zwei wesentliche Voraussetzungen erfüllt werden:

1. Die Leistung des vom Interferometer aufgefangenen Kugelreflexes muss ausreichend sein, um den lokalen Referenzstrahl mit hinreichendem Rauschabstand zu modulieren.

2. Die Laufzeitverteilung innerhalb des reflektierten und aufgesammelten Strahls muss scharf sein. In anderen Worten, es darf keine Teilstrahlen geben, die einen um mehr als einen Bruchteil der Lichtwellenlänge kürzeren oder längeren Weg zurückgelegt haben.

Diese beiden Voraussetzungen können mit einer an die Entfernung des Zielobjektes 40 angepassten Strahlformung erfüllt werden. Weitere Anforderungen ergeben sich aus der Notwendigkeit, die Kugel mit dem Messstrahl zentrisch zu treffen.

Das Zusammenwirken von Messstrahl 25 und Zielobjekt 40 wird im Folgenden mit Hilfe Gaußscher Optik beschrieben werden. Dies ist notwendig, da die strahlenoptischen Gesetze - die weitgehend der Intuition folgen - am Ort des Fokus versagen. Das Licht, das aus einer Singlemode-Faser austritt kann sehr gut mit Gaußscher Optik beschrieben werden. In Fig. 2 ist der Fokus eines Gaußstrahls abgebildet. Der Fokus ist kein Punkt sondern eine Taille ("Waist") mit einem minimalen Durchmesser. Die Krümmung der Wellenfronten ist zur Veranschaulichung übertrieben dargestellt. Wichtig hier ist vor allem, dass der Fokus nicht beliebig klein werden kann sondern vielmehr durch die Wellenlänge und die Strahldivergenz eine untere Schranke für den minimalen Durchmesser besteht. Die Krümmung der Wellenfronten ist eine nichtlineare Funktion des Abstands vom Fokuspunkt:

$$R(z) = z \left( 1 + \left( \frac{z_0}{z} \right)^2 \right) \tag{1}$$

mit der sogenannten Rayleighlänge $z_0$ in Abhängigkeit des minimalen Strahlradius $\omega$ ("Waist") und der Wellenlänge $\lambda$.

$$z_0 = \frac{\pi \omega^2}{\lambda} \tag{2}$$

Man erkennt an Gleichung (1), dass die Wellenfronten im Gaußstrahl einen minimalen Krümmungsradius im Abstand der Rayleighlänge aufweisen. Kann der Strahl nun so fokussiert werden, dass dieser minimale Krümmungsradius kleiner oder gleich dem der reflektierenden Kugel ist, so ist eine perfekte Spiegelung des Strahles ohne Lichtwegfehler möglich. Der Strahl wird in sich selbst gespiegelt. Dieser Fall tritt ein, wenn die Kugel mit der Wellenfront des gleichen Radius zur Deckung kommt. Dieser Fall ist schematisch in Fig. 3 dargestellt. Es findet eine phasenrichtige Reflexion auf einen identischen Strahl statt. Dies ermöglicht vollen Interferenzkontrast an der Kugel und eine optimale Aufsammeleffizienz des Reflexes.

Der für den Krümmungsradius notwendige kleine Waist kann durch eine Fokussierung mit entsprechend großer Divergenz erzielt werden:

$$\Theta \geq \arctan \left( \frac{\lambda}{\pi \omega_0} \right) \tag{3}$$

Für eine Kugel mit Durchmesser von beispielsweise 10 mm ist demnach eine Divergenz von 0,8° notwendig, was den minimalen Strahldurchmesser am Ort der letzten Linse, d.h. deren minimale Apertur, definiert. Im maximalen Abstand von 1 m wäre zum Beispiel ein Auskoppler mit einem effektiven Durchmesser von mindestens 28 mm notwendig um einen Waist von 35 $\mu$m zu erzeugen, der dann einen minimalen Wellenfrontradius von 5 mm hat.

Es ist somit möglich, den Messstrahl so zu fokussieren, dass eine phasenrichtige Reflexion über den gesamten Querschnitt stattfindet. Dies ermöglicht in der Folge ein Interferenzsignal mit maximalem Kontrast. Mit zunehmender Entfernung ist allerdings eine Strahlformungsoptik mit immer größerer Apertur und Brennweite notwendig. Zumindest im Bereich bis wenige Meter ist dies jedoch realisierbar.

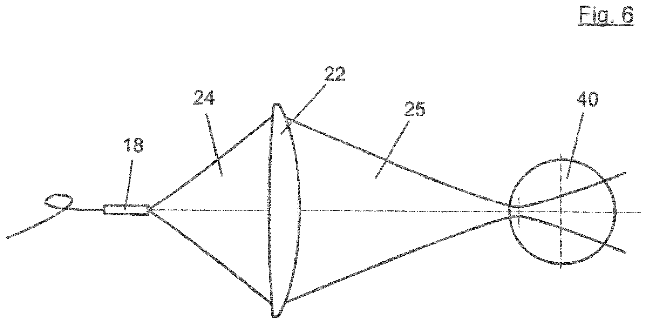

Nachfolgend wird die Ausrichtung und Nachführung des Messstrahls 25 auf das Zielobjekt 40 anhand eines konkreten Ausführungsbeispiels unter Bezugnahme auf Fig. 6 erläutert. Das Messlicht vom Interferometer kommt aus einer Singlemode-Faser 18 und wird bei dem gezeigten Ausführungsbeispiel von einer einzelnen Linse 22 im Abstand von 90 mm fokussiert. Der dabei (rechnerisch) entstehende Waist hat einen Durchmesser von 52.5$\mu$m. Damit geht eine Rayleighlänge von 1.4 mm einher und entsprechend ein minimaler Wellenfrontradius von 2.8 mm. Unter idealen Bedingungen liegt der Waist 4.57 mm hinter (im Inneren) der Kugeloberfläche. Genau dann kommen die Wellenfronten mit der Kugel zu Deckung.

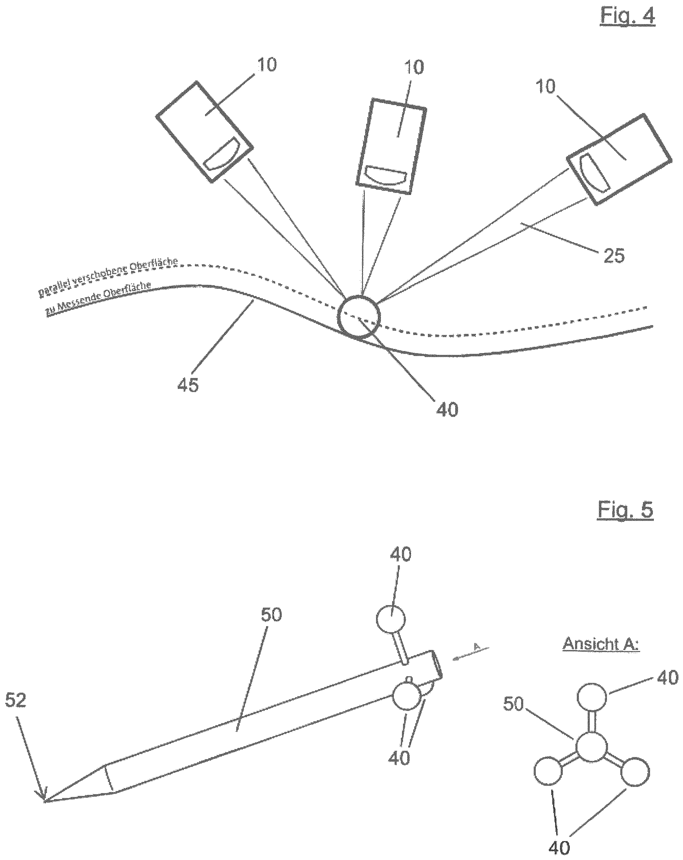

Gemäß einer weiteren Ausgestaltung der Erfindung lassen sich mit einer Kombination von mehreren Messstrahlen und Interferometern die Abstände eines Zielobjekts 40 zu verschiedenen Referenzpunkten ermitteln, so dass aus den einzelnen Entfernungen die Position des Zielobjekts 40 im Raum berechnet werden kann. Hierbei kommt der Vorteil des erfindungsgemäßen Verfahrens zum Tragen, dass eine Ausrichtung des Zielobjektes auf den Messstrahl nicht notwendig ist. Eine Variante der Positionsbestimmung des Zielobjekts 40 im Raum unter Verwendung von mehreren an unterschiedlichen Positionen angeordneten Entfernungsmesseinrichtungen 10 ist in Fig. 4 schematisch dargestellt. Im gezeigten Beispiel bewegt sich das kugelförmige Zielobjekt 40 frei auf einer zu untersuchenden Oberfläche 45, deren Topographie unter Berücksichtigung des Radius des kugelförmigen Zielobjekts mit hoher Messgenauigkeit abgetastet werden kann. Die Anzahl der verwendeten Zielerfassungseinrichtungen 10 kann basierend auf der Anzahl der Freiheitsgrade des Zielobjekts 40 gewählt werden. Zur Erhöhung der Messgenauigkeit durch Redundanz können auch mehr Messstrahlen als Freiheitsgrade des Zielobjekts eingesetzt werden. Das beschriebene Verfahren kann beispielsweise im Bereich der Materialprüfung eingesetzt werden.

Gemäß noch einer weiteren Ausgestaltung der Erfindung kann die Position und Ausrichtung eines Gegenstandes im Raum bestimmt werden, wobei an dem Gegenstand je nach Symmetrie des Gegenstandes und eventuell erwünschten Redundanzen bei möglicher Abschattung einer der Zielobjekte zwei, drei oder mehrere voneinander beabstandete kugelförmige Zielobjekte angebracht sind, deren räumliche Positionen durch das interferometrische Verfahren erfasst werden. Dies ist beispielhaft in Fig. 5 gezeigt. An einem stiftförmigen Gegenstand 50 sind drei kugelförmige Zielobjekte 40 in definierten Abständen angebracht. Durch Bestimmung der Position aller drei Zielobjekte 40 mittels jeweils drei Messstrahlen - wie oben beschrieben - läßt sich beispielsweise die Position sowie die Ausrichtung des Gegenstandes 50 im Raum und damit auch die Position einer Messspitze 52 mit großer Messgenauigkeit bestimmen. Dies eröffnet Anwendungen insbesondere im Bereich der Robotertechnik. Zur einfachen Unterscheidung können dabei die mehreren voneinander beabstandeten Zielobjekte 40 Kugeln mit unterschiedlicher Form, Farbe, Größe oder Position sein.

Zusammenfassend schlägt die Erfindung ein vielseitig anwendbares berührungsfreies Verfahren und eine Vorrichtung zur präzisen Bestimmung der Position, insbesondere der räumlichen Position eines Zielobjekts mittels interferometrischer Längenmessung vor.

**Patentansprüche**

1. Verfahren zur Bestimmung der Position eines beweglichen Zielobjekts (40) im Raum, aufweisend die Schritte:

   - Ausrichtung und kontinuierliche Nachführung eines kohärenten, fokussierten Messstrahls (25) auf das eine konvexe reflektierende Oberfläche aufweisende kugelförmige Zielobjekt (40), derart, dass das Zentrum des Zielobjekts (40) im Fokus des Messstrahls (25) liegt, wobei die Fokusposition des Messstrahls (25) kontinuierlich auf die Position des Zielobjekts (40) nachgeführt wird, und
   - Bestimmung eines Abstandes zwischen dem Zielobjekt (40) und einem Referenzpunkt durch interferometrische Überlagerung des von dem Zielobjekt (40) reflektierten Messstrahls (40) mit einem Referenzstrahl (17),

   **dadurch gekennzeichnet, dass** der Messstrahl (25) so auf das Zielobjekt (40) fokussiert wird, dass der gemäß Gauß'scher Optik minimale Krümmungsradius des Messstrahls (25) in dessen Fokusbereich kleiner oder gleich dem Krümmungsradius der Oberfläche des Zielobjekts (40) ist.

2. Verfahren nach Anspruch 1, wobei die Grobbestimmung der Position des Zielobjekts (40) zur Nachführung der Fokusposition des Messstrahls (25) mittels einer Positionserfassungskamera erfolgt.

3. Verfahren nach Anspruch 1, wobei die Grobbestimmung der Position des Zielobjekts (40) zur Nachführung der Fokusposition des Messstrahls (25) durch Erfassung einer durch das Zielobjekt (40) reflektierten Intensität eines nicht fokussierten Steuerstrahls erfolgt.

4. Verfahren nach Anspruch 3, wobei der Steuerstrahl nicht kohärent ist.

5. Verfahren nach einem der vorangehenden Ansprüche, wobei der Referenzstrahl (17) durch Teilreflexion aus dem Messstrahl erzeugt wird.

6. Verfahren nach einem der vorangehenden Ansprüche, wobei eine räumliche Position des Zielobjekts (40) mittels mehrerer von unterschiedlichen Positionen ausgestrahlter und auf das Zielobjekt (40) gerichteter Messstrahlen (25) bestimmt wird.

7. Verfahren nach Anspruch 6, wobei die Anzahl der auf das Zielobjekt (40) gerichteten Messstrahlen (25) in Abhängigkeit der Freiheitsgrade des Zielobjekts (40) und gewünschter Messredunanzen wählbar ist.

8. Verfahren nach Anspruch 6 oder 7, wobei die Topographie einer Oberfläche (45) mittels räumlicher Positionsbestimmung eines auf der Oberfläche (45) bewegbaren kugelförmigen Zielobjektes (40) erfasst wird.

9. Verfahren zur Bestimmung der Position und Ausrichtung eines Gegenstandes (50) im Raum, wobei an dem Gegenstand (50) mehrere voneinander beabstandete kugelförmige Zielobjekte (40) angebracht sind, deren räumliche Positionen durch das Verfahren nach Anspruch 8, 9, oder 10 bestimmt werden.

10. Verfahren nach Anspruch 9, wobei die mehreren voneinander beabstandeten Zielobjekte (40) voneinander unterscheidbar ausgebildet sind.

11. Verfahren nach Anspruch 9 oder 10, wobei die räumliche Position einer Messspitze (52) ermittelt wird, die definierte Abstände zu den mehreren Zielobjekten (40) aufweist.

12. Vorrichtung zur Bestimmung der Position eines eine konvexe reflektierende Oberfläche aufweisenden, beweglichen Zielobjekts (40) im Raum, aufweisend:

- eine Lichtquelle (12) zur Erzeugung eines kohärenten Messstrahls (25)
- eine Abbildungsoptik (22) ausgebildet zur Fokussierung des Messstrahls (25) auf das kugelförmige Zielobjekt (40), derart, dass das Zentrum des Zielobjekts (40) im Fokus des Messstrahls (25) liegt,
- eine Einrichtung (21) zur Erzeugung eines Referenzstrahls (17) aus dem Messstrahl (25),
- einen Detektor (30) zur Erfassung eines durch Überlagerung des von dem Zielobjekt reflektierten Messstrahls (25) mit dem Referenzstrahl (17) erzeugten Interferenzsignals,
- eine Nachführungseinrichtung (20) zur kontinuierlichen Nachführung des Fokus des Messstrahls (25), so dass der Fokus des Messstrahls im Bereich des Zielobjekts (40) liegt, und
- eine Auswertungseinrichtung (35) zur Bestimmung eines Abstandes zwischen Zielobjekt (40) und einem Referenzpunkt durch Auswertung des Interferenzsignals,

**dadurch gekennzeichnet, dass** der Messstrahl (25) so auf das Zielobjekt (40) fokussiert wird, dass der gemäß Gauß'scher Optik minimale Krümmungsradius des Messstrahls (25) in dessen Fokusbereich kleiner oder gleich dem Krümmungsradius der Oberfläche des Zielobjekts (40) ist.

13. Vorrichtung nach Anspruch 12, aufweisend eine Positionserfassungskamera zur Grobbestimmung der Position des Zielobjektes (40) zur Nachführung der Fokusposition des Messstrahls (25).

14. Vorrichtung nach Anspruch 12 oder 13, aufweisend eine Lichtquelle (12) zur Erzeugung eines nicht fokussierten Steuerstrahls, wobei der Detektor (30) ausgebildet ist zur Erfassung einer durch das Zielobjekt (40) reflektierten Intensität des Steuerstrahls als Steuergröße für die Grobbestimmung der Position des Zielobjekts (40).

**Claims**

1. Method for determining the position of a movable target object (40) in space, comprising the steps of:

   - directing a coherent, focused measurement beam (25) at the spherical target object (40), which has a convex reflective surface in such a way that the centre of the target object (40) lies at the focus of the measurement beam (25), wherein the focus position of the measurement beam (25)is tracked continuously on the position of the target object (40), and
   - determining a distance between the target object (40) and a reference point by interferometrically superposing the measurement beam (40) reflected by the target object (40) with a reference beam (17),
   - **characterized in that** the measurement beam (25) is focused on the target object (40) in such a way that the minimum radius of curvature of the measurement beam (25) according to Gaussian optics in its focal area is smaller than or equal to the radius of curvature of the surface of the target object (40).

2. Method according to claim 1, wherein the rough positioning of the target object (40) for tracking the focus position of the measurement beam (25) is carried out by means of a position-detecting camera.

3. Method according to claim 3, wherein the rough positioning of the target object (40) for tracking the focus position of the measurement beam (25) is carried out by determining an intensity reflected by the target object (40) of a non-focused control beam.

4. Method according to claim 3, wherein the control beam is not coherent.

5. Method according to one of the preceding claims, wherein the reference beam (17) is produced by partial reflection from the measurement beam.

6. Method according to one of the preceding claims,
   wherein a spatial position of the target object (40) is determined by means of a plurality of measurement beams (25) beamed from different positions and directed at the target object (40).

7. Method according to claim 6, wherein the number of measurement beams (25) directed at the target object (40) is selectable depending on the degrees of freedom of the target object (40) and the required redundant measurements.

8. Method according to claim 6 or 7, wherein the topography of a surface (45) is determined by means of spatial position determination of a spherical target object (40) movable on the surface (45).

9. Method for determining the position and directing of an object (50) in space, wherein a plurality of spherical target objects (40) spaced apart from each other are disposed on the object (50), the spatial positions of which are determined by the method according to claim 6, 7, or 8.

10. Method according to claim 9, wherein the plurality of target objects (40) spaced apart from each other are configured distinguishably from each other.

11. Method according to claim 9 or 10, wherein the spatial position of a measuring tip (52) is determined, which has defined distances to the plurality of target objects (40).

12. Device for determining the position of a target object (40) movable in space which has a convex reflective surface, comprising:

   - a light source (12) for producing a coherent measurement beam (25)
   - imaging optics (22) designed for focusing the measurement beam (25) on the spherical target object (40) in such a way that the centre of the target object (40) lies at the focus of the measurement beam (25).
   - a device (21) for producing a reference beam (17) from the measurement beam (25),
   - a detector (30) for detecting an interference signal produced by the superposition of the measurement beam (25) reflected by the target object with the reference beam (17),
   - a tracking device (20) for continuously tracking the focus of the measurement beam (25), so that the focus of the measurement beam lies in the area of the target object (40), and
   - an evaluation device (35) for determining a distance between the target object (40) and a reference point by evaluating the interference signal
   - **characterized in that** the measurement beam (25) is focused on the target object (40) in such a way that the minimum radius of curvature of the measurement beam (25) according to Gaussian optics in its focal area is smaller than or equal to the radius of curvature of the surface of the target object (40).

13. Device according to claim 12, having a position-detecting camera for the rough determining of the position of the target object (40) for tracking the focus position of the measurement beam (25).

14. Device according to claim 12 or 13, having a light source (12) for producing a non-focused control beam, wherein the detector (30) is configured for the detecting of an intensity of the control beam reflected by the target object (40) as a control variable for the rough determination of the position of the target object (40).

**Revendications**

1. Procédé pour déterminer la position d'un objet cible (40) mobile dans l'espace, comprenant les étapes suivantes :

   - orientation et suivi continu d'un faisceau de mesure (25) cohérent et focalisé sur l'objet cible (40) de forme sphérique présentant une surface réfléchissante convexe, de telle sorte que le centre de l'objet cible (40) se trouve au point focal du faisceau de mesure (25), la position au point focal du faisceau de mesure (25) étant suivie en continu jusqu'à la position de l'objet cible (40), et
   - détermination d'une distance entre l'objet cible (40) et un point de référence par superposition interférométrique du faisceau de mesure (40) réfléchi par l'objet cible (40) avec un faisceau de référence (17),

   **caractérisé en ce que** le faisceau de mesure (25) est focalisé sur l'objet cible (40) de telle sorte que le rayon de courbure minimal du faisceau de mesure (25) selon l'optique gaussienne dans sa zone focale soit inférieur ou égal au rayon de courbure de la surface de l'objet cible (40).

2. Procédé selon la revendication 1, dans lequel la détermination approximative de la position de l'objet cible (40) pour le suivi de la position focale du faisceau de mesure (25) est effectuée au moyen d'une caméra de détection de position.

3. Procédé selon la revendication 1, dans lequel la détermination approximative de la position de l'objet cible (40) pour le suivi de la position focale du faisceau de mesure (25) est effectuée par détection d'une intensité d'un faisceau de commande non focalisé réfléchi par l'objet cible (40).

4. Procédé selon la revendication 3, dans lequel le faisceau de commande n'est pas cohérent.

5. Procédé selon l'une des revendications précédentes, dans lequel le faisceau de référence (17) est généré par réflexion partielle à partir du faisceau de mesure.

6. Procédé selon l'une des revendications précédentes, dans lequel une position spatiale de l'objet cible (40) est déterminée au moyen de plusieurs faisceaux de mesure (25) émis depuis différentes positions et dirigés vers l'objet cible (40).

7. Procédé selon la revendication 6, dans lequel le nombre de faisceaux de mesure (25) dirigés vers l'objet cible (40) peut être choisi en fonction des degrés de liberté de l'objet cible (40) et des redondances de mesure souhaitées.

8. Procédé selon la revendication 6 ou la revendication 7, dans lequel la topographie d'une surface (45) est détectée au moyen d'une détermination spatiale de la position d'un objet cible (40) de forme sphérique mobile sur la surface (45).

9. Procédé de détermination de la position et de l'orientation d'un objet (50) dans l'espace, dans lequel plusieurs objets cibles (40) de forme sphériques espacés les uns des autres sont montés sur l'objet (50), dont les positions spatiales sont déterminées par le procédé selon la revendication 6, 7 ou 8.

10. Procédé selon la revendication 9, dans lequel les objets cibles de la pluralité d'objets cibles (40) espacés les uns des autres sont configurés de manière à pouvoir être distingués les uns des autres.

11. Procédé selon la revendication 9 ou la revendication 10, dans lequel la position spatiale d'une pointe de mesure (52) est déterminée, laquelle présente des distances définies par rapport à la pluralité d'objets cibles (40).

12. Dispositif pour déterminer la position dans l'espace d'un objet cible mobile (40) présentant une surface réfléchissante convexe, comprenant :

- une source de lumière (12) pour générer un faisceau de mesure (25) cohérent,
- une optique de reproduction (22) conçue pour focaliser le faisceau de mesure (25) sur l'objet cible (40) de forme sphérique, de telle sorte que le centre de l'objet cible (40) se trouve au point focal du faisceau de mesure (25),
- un dispositif (21) pour générer un faisceau de référence (17) à partir du faisceau de mesure (25),
- un détecteur (30) pour détecter un signal d'interférence généré par la superposition du faisceau de mesure (25) réfléchi par l'objet cible avec le faisceau de référence (17),
- un dispositif de suivi (20) pour suivre de façon continue le point focal du faisceau de mesure (25), de sorte que le point focal du faisceau de mesure se trouve dans la zone de l'objet cible (40), et
- un dispositif d'évaluation (35) pour déterminer une distance entre l'objet cible (40) et un point de référence par évaluation du signal d'interférence,

**caractérisé en ce que** le faisceau de mesure (25) est focalisé sur l'objet cible (40) de telle sorte que le rayon de courbure minimal du faisceau de mesure (25) selon l'optique gaussienne dans sa zone de focalisation soit inférieur ou égal au rayon de courbure de la surface de l'objet cible (40).

13. Dispositif selon la revendication 12, comprenant une caméra de détection de position pour déterminer approximativement la position de l'objet cible (40) afin de suivre la position focale du faisceau de mesure (25).

14. Dispositif selon la revendication 12 ou la revendication 13, présentant une source lumineuse (12) pour générer un faisceau de commande non focalisé, le détecteur (30) étant conçu pour détecter une intensité du faisceau de commande réfléchi par l'objet cible (40) en tant que grandeur de commande pour la détermination approximative de la position de l'objet cible (40).

Fig. 1

Fig. 2

Fig. 3

Wellenfronten parallel Spiegelfäche

Fig. 4

parallel verschobene Oberfläche
zu messende Oberfläche

Fig. 5

Ansicht A:

Fig. 6

Fig. 7

| Ausrichtung des Messstrahls auf das Zielobjekt derart, dass das Zielobjekt im Fokus des Messstrahls liegt | S1 |

| Interferometrische Bestimmung des Abstandes zum Zielobjekt | S2 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037137 A1
- DE 102008045387 A1
- DE 102008045386 A1
- DE 102010062842 A1
- US 2002176090 A1
- WO 2015082683 A2
- JP 2012137382 A
- US 20080111985 A1
- US 4964218 A
- US 20110013200 A1
- US 20130208128 A1